# EUROPÄISCHE PATENTANMELDUNG

(11) **EP 1 637 856 A2**
(43) Veröffentlichungstag der Anmeldung: **22.03.2006**
(21) Anmeldenummer: 05019322.6
(22) Anmeldetag: 06.09.2005
(51) Int. Cl.: G01L 1/22

(54) **Drehmoment-Messaufnehmer**

(30) Priorität: 17.09.2004 DE 102004045312
(71) Anmelder: GTM GASSMANN THEISS MESSTECHNIK GMBH, 64404 Bickenbach (DE)
(72) Erfinder: Gassmann, Helmut Dr.-Ing., 64342 Seeheim-Jugenheim (DE); Schulder, Gerhard Dipl.-Ing., 64673 Zwingenberg (DE)
(74) Vertreter: Katscher Habermann Patentanwälte

(57) **Zusammenfassung**

Ein Drehmoment-Messaufnehmer weist einen axialsymmetrischen Verformungskörper auf, der an mehreren Umfangsstellen mit Dehnungsmesselementen (a, b, c, d) bestückt ist, die zu einer Messbrückenschaltung zusammengeschaltet sind und jeweils Schubspannungen erfassen. Der Verformungskörper ist ein an zwei gegenüberliegende Umfangsstellen (2) angeflachter Hohlzylinder (1). Die Dehnungsmesselemente (a, b, c, d) sind an den Innenseiten der angeflachten Umfangsstellen (2) angebracht. Der Innenraum (4) des Hohlzylinders ist (1) stirnseitig hermetisch verschlossen. Der Hohlzylinder (1) ist stirnseitig mit Krafteinleitungsflanschen versehen.

## Beschreibung

Die Erfinder betrifft einen Drehmoment-Messaufnehmer mit einem axialsymmetrischen Verformungskörper, der an mehreren Umfangsstellen mit zu einer Messbrückenschaltung zusammengeschalteten, jeweils Schubspannungen erfassenden Dehnungsmesselementen bestückt ist.

Derartige Drehmoment-Messaufnehmer sind in unterschiedlichen Ausführungen bekannt. Als Dehnungsmesselemente werden üblicherweise Dehnungsmessstreifen verwendet, an denen bei einer Längenänderung infolge der Verformung des Verformungskörpers eine elektrische Widerstandsänderung auftritt, die in einer Messbrückenschaltung erfasst wird und ein zur Bestimmung des übertragenen Drehmoments dienendes Signal liefert.

Wenn gleichzeitig mit dem zu messenden Drehmoment hohe, jedoch nicht zu messende Axialkräfte auftreten, so kommt es zwischen dem durch die Axialkraft verursachten Signal und dem durch die Schubspannung verursachten Messsignal zu einem Übersprechen, wodurch die Messgenauigkeit des Drehmoment-Messaufnehmers stark beeinträchtigt oder eine Messung sogar unmöglich gemacht werden kann. Eine konstruktive Abhilfe könnte darin bestehen, den Verformungskörper des Drehmoment-Messaufnehmers zu entlasten. Die hierfür erforderlichen Bauteile verursachen aber einen Drehmoment-Nebenschluss zum Verformungskörper des Drehmoment-Messaufnehmers und verursachen damit auch wieder eine Verschlechterung des Messergebnisses. Außerdem ist der hierfür erforderliche konstruktive Aufwand verhältnismäßig groß.

Der bei gleichzeitiger Übertragung hoher Axialkräfte auftretende Übersprechfehler kann auch durch Kalibrieren ermittelt und dann bei der Messung durch Einfügung von Korrektionen kompensiert werden. Dazu ist es aber erforderlich, bei der Drehmomentmessung auch die auftretenden Axialkräfte zu messen, wodurch der Messaufwand wesentlich vergrößert wird. Eine weitere Voraussetzung für eine solche Kompensation besteht darin, dass die Kraftflüsse durch den Messaufnehmer im späteren Einsatz den gleichen Verlauf wie bei der Kalibrierung haben müssen. Dies ist aber in der Regel nicht der Fall und wird auch bei der Messung nicht erkannt, so dass die Korrektion dann falsch ist und die Messunsicherheit wesentlich größer wird als angenommen.

Ein typisches Anwendungsgebiet von Drehmoment-Messaufnehmern bei gleichzeitiger Übertragung hoher Axialkräfte liegt beispielsweise in der Drehmomentmessung bei Rührgeräten mit hohem Eigengewicht der Anbauteile.

Aufgabe der Erfindung ist es daher, einen Drehmoment-Messaufnehmer der eingangs genannten Gattung so auszugestalten, dass ohne größeren konstruktiven Aufwand ein störender Einfluss hoher Axialkräfte auf die Drehmomentmessung vermieden wird. Gleichzeitig sollen störende Umgebungseinflüsse auf die Dehnungsmesselemente ausgeschlossen werden.

Diese Aufgabe wird erfindungsgemäß dadurch gelöst, dass der Verformungskörper ein an mehreren Umfangsstellen angeflachter Hohlzylinder ist und dass die Dehnungsmesselemente an den Innenseiten der angeflachten Umfangsstellen angebracht sind.

Der Hohlzylinder stellt ein geometrisch verhältnismäßig einfachen und deshalb mit hoher Genauigkeit herzustellenden Verformungskörper dar, der bei geringem Platzbedarf auch für die Übertragung hoher Axialkräfte und hoher Momente eingesetzt werden kann, ohne dass die Gefahr einer Überlastung besteht. Die für die Anbringung der Dehnungsmesselemente vorgesehenen Bereiche können in fertigungstechnisch sehr einfacher Weise, nämlich durch äußeres Anflachen, auf eine sehr geringe Wanddicke gebracht werden. Die Axialkraftübertragung erfolgt somit nahezu vollständig über die Querschnittsbereiche außerhalb der die Dehnungsmesselemente für die Drehmomentmessung tragenden dünnwandigen Umfangsstellen. An diesen Umfangsstellen erfolgt eine Verformung nahezu ausschließlich durch die dort auftretenden, von dem übertragenen Drehmoment verursachten Schubspannungen.

Die Anbringung der Dehnungsmesselemente an den Innenseiten der angeflachten Umfangsstellen sorgt für einen sehr guten Schutz der Dehnungsmesselemente gegen mechanische Beschädigungen und andere Umgebungseinflüsse. Vorzugsweise kann mit einfachen Maßnahmen erreicht werden, dass der Innenraum des Hohlzylinders stirnseitig hermetisch verschlossen ist, um einen vollständigen Schutz der Dehnungsmesselemente zu gewährleisten.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt:
Fig. 1 einen Drehmoment-Messaufnehmer im Längsschnitt,
Fig. 2 einen Schnitt längs der Linie II-II in Fig. 1 und
Fig. 3 eine vereinfachte Messbrückenschaltung für die bei Messaufnehmern nach Fig. 1 verwendeten Dehnungsmesselemente.

Der in der Zeichnung dargestellte Drehmomentmessaufnehmer dient dazu, ein in einem Wellenstrang übertragenes Drehmoment Mz zu messen, wobei gleichzeitig eine verhältnismäßig hohe Axialkraft Fz übertragen wird, die jedoch nicht gemessen werden muss.

Als Verformungskörper für den Drehmomentmessaufnehmer dient ein Hohlzylinder 1, der an zwei gegenüberliegenden Umfangsstellen 2 von außen angeflacht ist.

Der Hohlzylinder 1 ist stirnseitig mit Krafteinleitungsflanschen 3 versehen, die beim dargestellten Ausführungsbeispiel einstückig mit dem Hohlzylinder 1 ausgeführt sind.

Der Innenraum 4 des Hohlzylinders 1 ist an beiden Enden hermetisch verschlossen. Hierzu sind die Krafteinleitungsflansche 3 jeweils mit einem Wellenende 5, 6 hermetisch dicht verschweißt. Jedes Wellenende 5, 6 ist mit einem stirnseitigen Zentrierzapfen 7, 8 in der Bohrung 9 des Krafteinleitungsflansches 3 zentriert.

An den Innenseiten der angeflachten Umfangsstellen 2 sind als Dehnungsmesselemente Dehnungsmessstreifen a, b, c und d appliziert, die in einer Messbrückenschaltung gemäß Fig. 3 zusammengeschaltet sind.

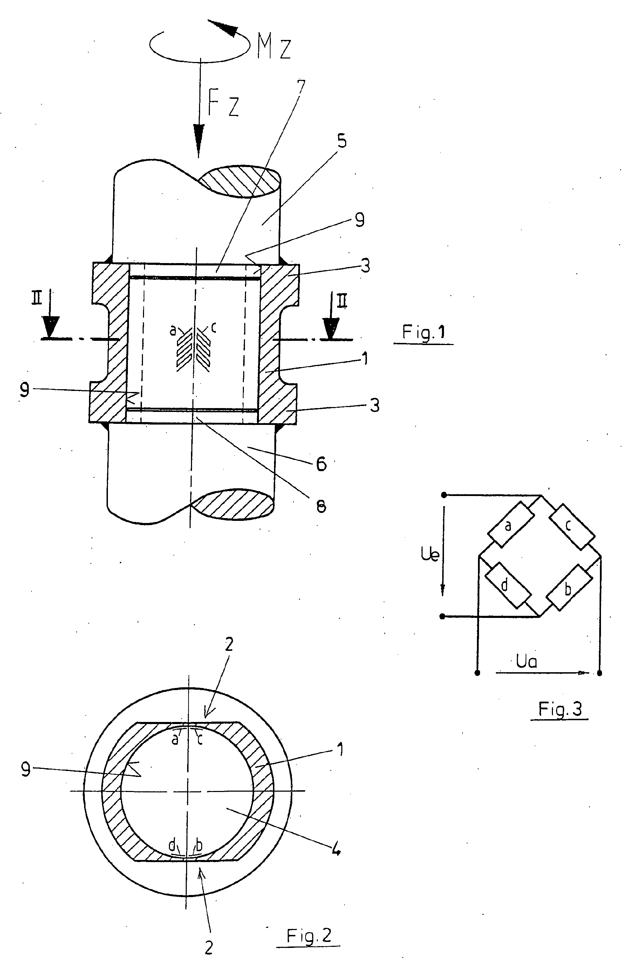

Wie man am Beispiel der Dehnungsmessstreifen a, c in Fig. 1 sieht, sind die Dehnungsmessstreifen a, b, c und d jeweils unter 45° zur Längsachse des Drehmoment-Messaufnehmers angeordnet und erfassen somit die dort auftretenden Schubspannungen, die durch das übertragene und zu messende Drehmoment Mz verursacht werden. Durch die in den Dehnungsmessstreifen, a, b, c und d bei Längenänderung auftretenden Widerstandsänderungen wird die an die Messbrückenschaltung gemäß Fig. 3 angelegte Eingangsspannung Ue in Abhängigkeit von dem übertragenen Drehmoment verändert. Die Ausgangsspannung Ua liefert somit ein dem Drehmoment Mz proportionales Messsignal. Wie man aus Fig. 3 erkennt, liegen die in entgegengesetzten Richtungen schräggestellten Dehnungsmessstreifen a und c bzw. d und b in entgegengesetzten Zweigen der Messbrückenschaltung. Die bei Drehmomentübertragung gleichsinnig verformten Dehnungsmessstreifen a, b bzw. c, d sind in der Messbrückenschaltung einander gegenüberliegend angeordnet.

## Patentansprüche

1. Drehmoment-Messaufnehmer mit einem axialsymmetrischen Verformungskörper, der an mehreren Umfangsstellen mit zu einer Messbrückenschaltung zusammengeschalteten, jeweils Schubspannungen erfassenden Dehnungsmesselementen bestückt ist, **dadurch gekennzeichnet, dass** der Verformungskörper ein an mehreren Umfangsstellen (2) angeflachter Hohlzylinder (1) ist und dass die Dehnungsmesselemente (a, b, c, d) an den Innenseiten der angeflachten Umfangsstellen (2) angebracht sind.

2. Drehmoment-Messaufnehmer nach Anspruch 1, **dadurch gekennzeichnet, dass** zwei gegenüberliegende Umfangsstellen (2) des Hohlzylinders (1) angeflacht sind.

3. Drehmoment-Messaufnehmer nach Anspruch 1, **dadurch gekennzeichnet, dass** der Innenraum (4) des Hohlzylinders (1) stirnseitig hermetisch verschlossen ist.

4. Drehmoment-Messaufnehmer nach Anspruch 1, **dadurch gekennzeichnet, dass** der Hohlzylinder (1) stirnseitig mit Krafteinleitungsflanschen (3) versehen ist.

5. Drehmoment-Messaufnehmer nach Ansprüchen 3 und 4, **dadurch gekennzeichnet, dass** die Krafteinleitungsflansche (3) jeweils mit einem Wellenende (5, 6) hermetisch dicht verschweißt sind.

6. Drehmoment-Messaufnehmer nach Anspruch 5, **dadurch gekennzeichnet, dass** jedes Wellenende (5, 6) mit einem stirnseitigen Zentrierzapfen (7, 8) in der Bohrung (9) des Krafteinleitungsflansches (3) zentriert ist.
